**Europäisches Patentamt**

**European Patent Office**

**Office européen des brevets**

(11) Veröffentlichungsnummer: **0 130 421**
A2

## (12) EUROPÄISCHE PATENTANMELDUNG

(21) Anmeldenummer: **84106594.9**

(22) Anmeldetag: **08.06.84**

(51) Int. Cl.⁴: **G 01 B 3/10**

(30) Priorität: **01.07.83 DE 3323706**

(43) Veröffentlichungstag der Anmeldung: **09.01.85**
Patentblatt 85/2

(84) Benannte Vertragsstaaten: **AT BE FR GB IT NL**

(71) Anmelder: **Karl Kuntze (GmbH & Co.), 7, Rheinstrasse, D-5650 Solingen 11 (DE)**

(72) Erfinder: **Kuntze, Richard, 23, Gravenberger Weg, D-5653 Leichlingen 1 (DE)**

(74) Vertreter: **Tackenberg, Karl, Dipl.-Ing., Birkenweiher 15, D-5650 Solingen (DE)**

(54) **Rollbandmass.**

(57) Um bei einem Rollbandmaß, bestehend aus einem als Handhabe dienenden kastenförmigen, aus zwei fest miteinander verbundenen, aus elastischem Kunststoff gefertigten Gehäusehälften (2, 3) zusammengesetzten Gehäuse (1), einer durch eine Zugfeder belasteten, auf einer Achse (4) gelagerten, etwa schüsselförmigen Trommel (5), dem auf die Trommel (5) aufgespulten Meßband (9) und einer von Hand zu betätigenden Rücklaufsperre für die Zugfeder, die Rücklaufsperre zu vereinfachen und zu verbessern, ist in dem Gehäuse (1) ein an der Trommel (5) unter Federdruck anliegender, von außen betätigbarer Bremskörper (12 bzw. 17) angeordnet.

0130421

Firma Karl Kuntze (GmbH. & Co), 565o Solingen 11, Rheinstraße 7

-----------------------------------------------------------

Rollbandmaß

-----------------------------------------------------------

Die Erfindung bezieht sich auf ein Rollbandmaß, wie solche aus einem als Handhabe dienenden kastenförmigen, aus zwei fest miteinander verbundenen, aus elastischem Kunststoff gefertigten Gehäusehälften zusammengesetzten Gehäuse, einer durch eine Zugfeder belasteten, auf einer Achse gelagerten, etwa schüsselförmigen Trommel, dem auf die Trommel aufgespulten Meßband und einer von Hand zu betätigenden Rücklaufsperre für die Zugfeder bestehen.

Bei einem bekannten Rollbandmaß (DE-PS 25 45 2o3) besteht die Rücklaufsperre für die Zugfeder aus der der Lagerung der Trommel dienenden Achse, die konzentrisch an einer vorgespannten, durch Aussparungen in der Wandung der einen Gehäusehälfte erzeugten Zunge angeformt ist und die Funktion eines Druckbolzens übernimmt, sowie aus einer durch Aussparungen in der Wandung der anderen Gehäusehälfte gebildeten axial federnden Zunge, die der Achse als Gegenlager dient und an ihrem freien Ende mit einem Sperrnocken versehen ist, an den an der Trommel kreisförmig angeordnete Nocken unter der Federspannung der Zugfeder anschlagen. Durch Fingerdruck auf die die Achse tragende federnde Zunge wird der Sperrnocken von den Nocken der durch Ausziehen des Meßbandes unter Federzug stehenden Trommel abgehoben und dadurch die Trommel zum Rücklauf freigegeben.

Der Erfindung liegt die Aufgabe zugrunde, die Rücklaufsperre eines Rollbandmaßes der eingangs beschriebenen Gattung zu vereinfachen und zu verbessern.

Die Lösung der Aufgabe besteht erfindungsgemäß darin, daß

a) an der Innenseite der einen Gehäusehälfte ein ringförmiger, mit der der Trommel als Lager dienenden Achse koaxialer Bremskörper angeformt ist, der im Ruhezustand unter dem Druck der Gehäusehälfte an der Wange der Trommel anliegt,

b) das freie Ende der Achse so weit bis an die Innenwand der Gehäusehälfte heranreicht, daß sich bei Druck auf die Gehäusehälfte an der Stelle, an der die Achse angeformt ist, der Bremskörper zwecks Freigabe des Meßbandes von der Wange der Trommel löst.

Durch die erfindungsgemäße Rücklaufsperre ist das Rollbandmaß gegenüber dem bekannten Rollbandmaß insofern wesentlich vereinfacht, als die Anordnung einer der Achse zugeordneten federnden Zunge mit Sperrnocken und die Anordnung von mit dem Sperrnocken zusammenwirkenden Nocken an der Trommel entfallen. Es ergibt sich daraus ein weiterer wesentlicher Vorteil, der darin zu erblicken ist, daß die Rücklaufsperre unmittelbar nach Auslösen wirksam wird, d.h., daß das Meßband genau in der Länge, in der es ausgezogen worden ist, festgelegt wird. Es ist dadurch eine genaue Messung ermöglicht. Das Ausziehen und Rückspulen des Meßbandes

-3-

erfolgt ferner gegenüber den bekannten Rollbandmaßen
geräuschlos.

Eine andere Lösung der Aufgabe besteht erfindungsgemäß
darin, daß
a) ein bekannter, in dem zur Lagerung der Trommel
   bestimmten Achskörper axial verschiebbarer, mit
   seinem einen Ende aus dem Gehäuse herausragender
   Druckbolzen an seinem anderen, gegenüber dem
   Achskörper vorstehenden Ende eine etwa ringförmige,
   angeformte Verbreiterung aufweist,
b) an der anderen Seite der Verbreiterung ringförmig
   angeordnete, schräg nach einwärts gerichtete
   elastische, vorgespannte Zungen angeformt sind,
   unter deren Druck der Bremskörper an der Wange der
   Trommel anliegt.

Die Ausbildung des Rollbandmaßes nach der weiteren Erfindung erbringt den Vorteil, daß der Bremskörper mit
größerem Druck an der Wange der Trommel anliegt. Es
können ferner die Gehäusehälften aus starrem Werkstoff
bestehen.

Eine vorteilhafte Weiterbildung der Erfindung besteht
darin, daß die Achse mit ihrem dem freien Ende abgekehrten Ende in an sich bekannter Weise an einer
durch Aussparungen in der Wandung der einen Gehäusehälfte erzeugten, axial federnden Zunge angeformt ist.

Das Betätigen der Achse zum Lösen des Bremskörpers
ist dadurch insofern erleichtert, als bereits leichter
Fingerdruck auf die Achse das Lösen des Bremskörpers
bewirkt.

Eine vorteilhafte Weiterbildung des Rollbandmaßes nach der weiteren Erfindung besteht darin, daß die Verbreiterung des Druckbolzens am Umfang nach dem Druckbolzen hin abgeschrägt ist und den Bremskörper bildet, und daß an der Wange der Trommel ein ringförmiger Bremsmantel angeformt ist, der am inneren Umfang parallel zu der Abschrägung des Bremskörpers abgeschrägt ist.

Durch diese Formgebung der Bremsflächen wird die Bremswirkung verbessert.

Die Erfindung ist nachstehend in den einzelnen Ausführungsbeispielen anhand der Zeichnung näher erläutert. Es zeigt:

Figur 1  das Rollbandmaß in Ansicht, teilweise aufgerissen,
Figur 2  einen Schnitt nach der Linie II-II der Figur 1,
Figur 3  das Rollbandmaß in einer anderen Ausführungsform der Erfindung ohne Meßband und Zugfeder in Ansicht,
Figur 4  einen Schnitt nach der Linie IV-IV der Figur 3,
Figur 5  das Rollbandmaß in einer anderen Ausführungsform der Erfindung ohne Meßband und Zugfeder im Längsschnitt und
Figur 6  das Rollbandmaß in einer anderen Ausführungsform der Erfindung ohne Meßband und Zugfeder im Längsschnitt.

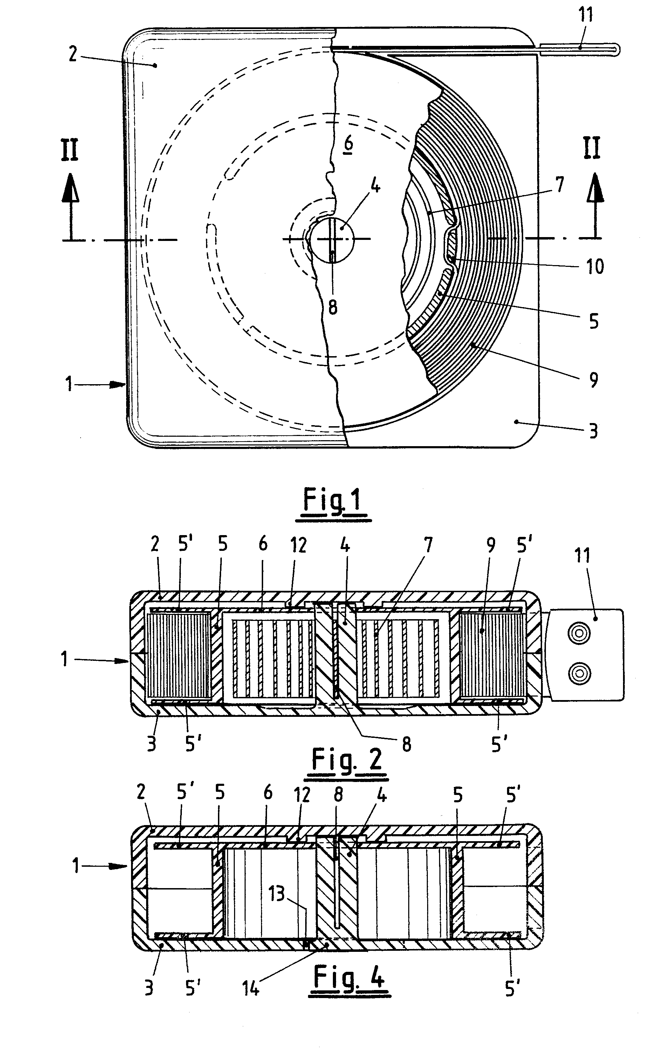

Das in den Figuren 1 und 2 dargestellte Rollbandmaß besteht aus dem Gehäuse 1, das aus zwei fest miteinander verbundenen, aus elastischem Kunststoff gefertigten Gehäusehälften 2,3 zusammengesetzt ist. Mit 4 ist eine an der Innenwand der Gehäusehälfte 3 angeformte, aus Kunststoff bestehende Achse bezeichnet, auf der die Trommel 5 gelagert ist. Mit 6 ist die Wange der Trommel 5 bezeichnet. In der Trommel 5 ist eine Spiralfeder 7 eingerollt. Diese ist mit ihrem einen Ende in einem Schlitz 8 der Achse 4 und mit ihrem anderen Ende an der Trommel 5 festgelegt. Mit 9 ist das auf der Trommel 5 aufgerollte Meßband bezeichnet, das zwischen zwei Vorsprüngen 5' geführt ist. Das Meßband 9 ist mit seinem einen Ende in Schlitzen 10 in der Wandung der Trommel 5 gehaltert und mit seinem anderen, mit einer Handhabe 11 versehenen Ende durch einen Schlitz in der Wandung des Gehäuses 1 hindurch nach außen geführt.

Gemäß der Erfindung ist an der Innenwand der Gehäusehälfte 2 ein ringförmiger, mit der Gehäusehälfte 2 einstückiger Bremskörper 12 angeordnet, der mit der Achse 4 koaxial ist und an der Wange 6 der Trommel 5 unter dem Druck der Gehäusehälfte 2 anliegt. Um den Bremskörper 12 von der Wange 6 der Trommel 5 zu lösen und dadurch die Trommel 5 zum Rücklauf freizugeben, wird auf die Gehäusehälfte 3 an der Stelle, an der die Achse 4 angeformt ist, unter geringfügigem Einbuchten der Gehäusehälfte 3 Fingerdruck ausgeübt, wobei die Achse 4 mit ihrem freien Ende die Gehäusehälfte 2 um ein geringes Maß ausbuchtet und der Bremskörper 12 von der Wange 6 der Trommel 5 gelöst wird. Die Trommel 5 ist hiernach zum Rücklauf freigegeben. Bei nachlassendem Fingerdruck bilden sich die Gehäusehälften 2,3 an den verformten Stellen wieder zurück, wobei der Bremskörper 12 wieder so fest an die Wange 6 der Trommel 5 angedrückt wird, daß die Trommel 5 blockiert ist. Um die Elastizität der beiden Gehäusehälften 2,3 an den zu verformenden Stellen zu erhöhen, kann der Wandungsquerschnitt der beiden Gehäusehälften 2,3 entsprechend verringert sein.

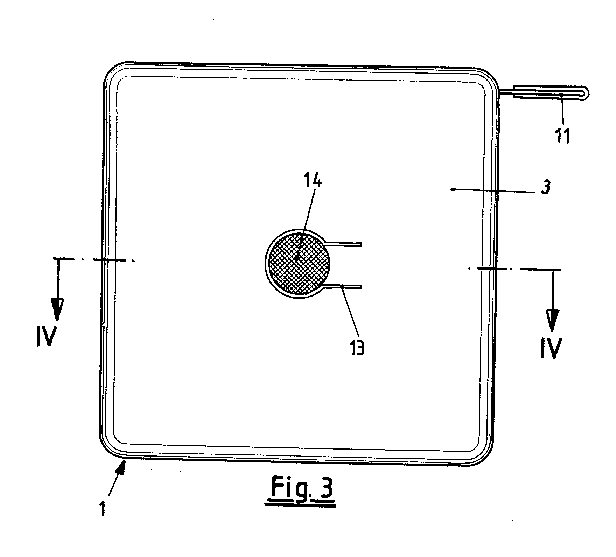

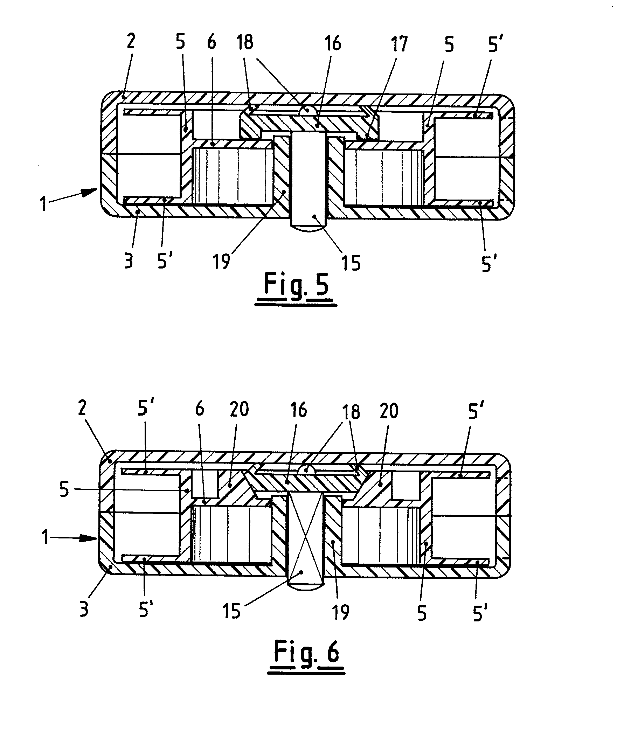

Bei dem in der Zeichnung in den Figuren 3 und 4 dargestellten Rollbandmaß ist die Achse 4 an einer federnden Zunge 14 angeformt, die durch Aussparungen 13 in der Wandung der Gehäusehälfte 3 erzeugt ist.

Bei dem in der Zeichnung in Figur 5 dargestellten Rollbandmaß ist ein aus Kunststoff bestehender Druckbolzen 15 vorgesehen, der mit seinem einen Ende aus dem Gehäuse 1 herausragt und an seinem anderen Ende eine etwa kreisförmige Verbreiterung 16 aufweist, die mit dem Druckbolzen 15 einstückig ist. An der einen Seite der Verbreiterung 16 ist ein ringförmiger, mit dem Druckbolzen 15 koaxialer Bremskörper 17 angeformt. An der anderen Seite der Verbreiterung 16 sind kreisförmig angeordnete, schräg nach einwärts gerichtete, elastische Zungen 18 angeformt, die unter Vorspannung an der Innenwand der Gehäusehälfte 2 anliegen. Der Bremskörper 17 liegt unter dem Druck der Zungen 18 an der Wange 6 der Trommel 5 an. Der Druckbolzen 15 ist in einem Achskörper 19 drehfest und axial verschiebbar geführt. Der Achskörper 19, auf dem die Trommel 5 gelagert ist, ist an der Innenwand der aus Kunststoff bestehenden Gehäusehälfte 3 angeformt. Bei Fingerdruck auf das aus dem Gehäuse 1 herausragende Ende des Druckbolzens 15 werden die federnden Zungen 18 weiter gespannt und dabei der Bremskörper 17 von der Wange 6 der Trommel 5 abgerückt, wonach die Trommel 5 zum Rücklauf freigegeben ist.

Bei dem in Figur 6 der Zeichnung dargestellten Rollbandmaß ist die Verbreiterung 16 am Umfang nach dem Druckbolzen 15 hin abgeschrägt und bildet den Bremskörper. Es ist ferner an der Wange 6 der Trommel 5 ein ringförmiger Bremsmantel 2o angeformt, der am inneren Umfang parallel zu der Abschrägung des

-7-

Bremskörpers abgeschrägt ist. Der Bremskörper liegt
unter dem Druck der federnden Zungen 18 an dem
Bremsmantel 2o an.

0130421

-8-

<u>Patentansprüche</u>

1. Rollbandmaß, bestehend aus einem als Handhabe dienenden kastenförmigen, aus zwei fest miteinander verbundenen, aus elastischem Kunststoff gefertigten Gehäusehälften (2,3) zusammengesetzten Gehäuse (1), einer durch eine Zugfeder belasteten, auf einer Achse (4) gelagerten, etwa schüsselförmigen Trommel (5), dem auf die Trommel (5) aufgespulten Meßband (9) und einer von Hand zu betätigenden Rücklaufsperre für die Zugfeder, dadurch gekennzeichnet, daß

   a) an der Innenseite der einen Gehäusehälfte (2) ein ringförmiger, mit der der Trommel (5) als Lager dienenden Achse (4) koaxialer Bremskörper (12) angeformt ist, der im Ruhezustand unter dem Druck der Gehäusehälfte (2) an der Wange (6) der Trommel (5) anliegt,

   b) das freie Ende der Achse (4) so weit bis an die Innenwand der Gehäusehälfte (2) heranreicht, daß sich bei Druck auf die Gehäusehälfte (2) an der Stelle, an der die Achse (4) angeformt ist, der Bremskörper (12) zwecks Freigabe des Meßbandes (9) von der Wange (6) der Trommel (5) löst.

2. Rollbandmaß, bestehend aus einem als Handhabe dienenden kastenförmigen, aus zwei fest miteinander verbundenen, aus elastischem Kunststoff gefertigten Gehäusehälften (2,3) zusammengesetzten Gehäuse (1), einer durch eine Zugfeder belasteten, auf einer Achse (4) gelagerten, etwa schüsselförmigen Trommel (5), dem auf die Trommel (5) aufgespulten Meßband (9) und einer von Hand zu betätigenden Rücklaufsperre für die Zugfeder, dadurch gekennzeichnet, daß

a) ein bekannter, in dem zur Lagerung der Trommel (5) bestimmten Achskörper (19) axial verschiebbarer, mit seinem einen Ende aus dem Gehäuse (1) herausragender Druckbolzen (15) an seinem anderen, gegenüber dem Achskörper (19) vorstehenden Ende eine etwa ringförmige, angeformte Verbreiterung (16) aufweist,

b) an der anderen Seite der Verbreiterung (16) ringförmig angeordnete, schräg nach einwärts gerichtete elastische, vorgespannte Zungen (18) angeformt sind, unter deren Druck der Bremskörper (17) an der Wange (6) der Trommel (5) anliegt.

3. Rollbandmaß nach Anspruch 1, dadurch gekennzeichnet, daß die Achse (4) mit ihrem dem freien Ende abgekehrten Ende in an sich bekannter Weise an einer durch Aussparungen (13) in der Wandung der einen Gehäusehälfte (2) erzeugten, axial federnden Zunge (14) angeformt ist.

4. Rollbandmaß nach Anspruch 2, dadurch gekennzeichnet, daß die Verbreiterung (16) des Druckbolzens (15) am Umfang nach dem Druckbolzen (15) hin abgeschrägt ist und den Bremskörper bildet, und daß an der Wange (6) der Trommel (5) ein ringförmiger Bremsmantel (2o) angeformt ist, der am inneren Umfang parallel zu der Abschrägung des Bremskörpers abgeschrägt ist.

0130421

**Fig 1**

**Fig. 2**

**Fig. 4**

**Fig. 3**

**Fig. 5**

**Fig. 6**